# EUROPÄISCHE PATENTSCHRIFT

(11) **EP 1 151 024 B1**
(45) Veröffentlichungstag und Bekanntmachung des Hinweises auf die Patenterteilung: **07.05.2008**
(21) Anmeldenummer: 99962205.3
(22) Anmeldetag: 03.12.1999
(51) Int. Cl.: C08G 18/28, C09D 201/10, C09J 201/10

(54) **VERWENDUNG VON DISPERSIONEN SILYLTERMINIERTER POLYMERER ALS DICHTMASSEN**
USE OF DISPERSIONS OF SILYL-TERMINATED POLYMERS AS SEALANTS
UTILISATION DE DISPERSIONS DE POLYMERES A TERMINAISON SILYLE COMME MASTICS

(30) Priorität: 11.12.1998 DE 19858908
(43) Veröffentlichungstag der Anmeldung: 07.11.2001
(73) Patentinhaber: Henkel Kommanditgesellschaft auf Aktien, 40589 Düsseldorf (DE)
(72) Erfinder: MAJOLO, Martin, D-41812 Erkelenz (DE); KLAUCK, Wolfgang, D-40670 Meerbusch (DE); KLEIN, Johann, D-40593 Düsseldorf (DE); SCHILLING, Gaby, D-40219 Düsseldorf (DE); LOTH, Helmut, D-45136 Essen (DE); ERNST, Wolfgang, D-40589 Düsseldorf (DE)
(86) Internationale Anmeldenummer: PCT/EP1999/009442
(87) Internationale Veröffentlichungsnummer: WO 2000/035981

(56) Entgegenhaltungen:
- EP-A- 0 163 214
- EP-A- 0 315 006
- EP-A- 0 498 442
- EP-A- 0 763 582
- EP-A- 0 818 496
- DE-A- 4 413 562

## Beschreibung

Gegenstand der Erfindung ist die Verwendung einer Polymerdispersion, enthaltend Wasser, mindestens ein erstes organisches Polymeres das frei von ionischen Gruppen ist und mindestens eine Gruppe der allgemeinen Formel I

-A-Si(Z)ₙ(OH)₃₋ₙ (I),

worin A für CH₂ oder für einen linearen oder verzweigten, gesättigten oder ungesättigten Alkylenrest mit 2 bis etwa 12 C-Atomen oder für einen Arylenrest mit etwa 6 bis etwa 18 C-Atomen oder einen Arylenalkylenrest mit etwa 7 bis etwa 19 C-Atomen, Z für CH₃, O-CH₃ oder für einen linearen oder verzweigten, gesättigten oder ungesättigten Alkylrest oder Alkoxyrest mit 2 bis etwa 12 C-Atomen und n für 0, 1, oder 2 steht, oder ein Kondensationsprodukt mindestens zwei solcher Gruppen, aufweist und ein weiteres organisches Polymeres oder ein Gemisch aus zwei oder mehr weiteren organischen Polymeren, als Dichtmasse.

Silanterminierte, feuchtigkeitshärtende Einkomponenten-Polyurethanmassen werden im zunehmenden Maße als weichelastische Beschichtungs-, Dichtungs- und Klebemassen im Bauwesen und in der Automobilindustrie verwendet Bei solchen Anwendungen werden hohe Anforderungen an das Dehn- und Adhäsionsvermögen sowie an die Aushärtegeschwindigkeit gestellt. Weiterhin weisen solche silanterminierten Polymeren oft wasserabstoßende Eigenschaften auf, die daraus hergestellten Dicht-, Beschichtungs- oder Klebemassen ausgezeichnete Wasserfestigkeit und Wärmestandfestigkeit verleihen.

Aus dem Stand der Technik sind alkoxysilanterminierte Polymere bekannt, die als weichelastische Dichtungs-, Beschichtungs- und Klebemassen eingesetzt werden.

So beschreibt die EP-B 0 549 626 alkoxysilanterminierte, feuchtigkeitshärtende Einkomponenten-Polyurethane, die beispielsweise als Fugendichtungsmassen Verwendung finden. Die offenbarten Verbindungen weisen eine schnelle Hautbildung und schnelle Klebefreiheit, auch nach längerer Lagerung auf. Nachteilig bei den beschriebenen Verbindungen ist jedoch, daß sie aufgrund ihrer reaktiven Endgruppen unter Feuchtigkeitsausschluß gelagert werden müssen und über einen längeren Lagerzeitraum die Gefahr irreversibler Eigenschaftsänderungen besteht.

Um diesem Nachteil Abhilfe zu schaffen, wurden in der Vergangenheit Versuche unternommen, Dispersionen von silanterminierten Polymeren herzustellen. So beschreibt beispielsweise die DE-A 36 37 836 eine wäßrige Silikondispersion, die sich aus einem OH-terminierten Polydiorganosiloxan, (Organo)Metallverbindungen und einem Silikonat erhalten läßt. Die beschriebenen Produkte weisen eine Aushärtzeit von mindestens einem Tag auf. Polymere, die mindestens eine Gruppe der allgemeinen Formel -A-Si(Z)ₙ(OH)₃₋ₙ aufweisen, werden in der Druckschrift nicht offenbart.

Die DE-C 42 15 648 betrifft eine Dispersion von alkoxysilanterminierten Polymeren, die in der Polymerkette zur Salzbildung befähigte Aminogruppen aufweisen. Beschrieben werden Dispersionen mit einem Feststoffgehalt von maximal 41 Gew.-%. Werden solche Dispersionen zur Verklebung von saugfähigen Materialien benutzt, so führt der hohe Wassergehalt zu einer hohen Belastung des Substrats mit Wasser. Dies kann beispielsweise bei Papierverklebungen zu Formveränderungen im Substrat führen, die nicht erwünscht sind,

Die WO 91/08244 betrifft Steinschutzmittel, die alkoxysilangruppenterminierte Polyurethane enthalten. Die Polymergehalte der beschriebenen Dispersionen sind jedoch sehr gering, und liegen zwischen 5 und 30 Gew.-%. Zudem weisen die Dispersionen einen pH-Wert von ≥ 10 auf. Die beschriebenen Dispersionen sind damit weder als Oberflächenbeschichtungsmittel im Sinne einer Herstellung von mechanisch belastbaren Überzügen, noch als Dicht- oder Klebstoff brauchbar.

Die DE-US 25 58 653 betrifft silanolhaltige Urethandispersionen, Die beschriebenen Polyurethane weisen hydrolisierbare oder hydrolisierte Silylendgruppen auf und verfügen im Polymerrückgrat löslich machende oder emulgierende Gruppen, insbesondere Carboxylgruppen. Die beschriebenen Dispersionen weisen Polymergehalte von bis zu etwa 40 Gew.-% auf. Die beschriebenen Polymeren müssen neben den löslich machenden Gruppen noch Harnstoffgruppen aufweisen, die durch eine Kettenverlängerung eines Vorpolymerisats mit Isocyanatendgruppen in Wasser erzeugt werden. Die beschriebenen Verbindungen zeigen bei hohen Siloxangehalten eine starke Koagulatbildung und verfügen über eine nur unbefriedigende Wasserbeständigkeit.

Problematisch wirkt sich bei allen aus dem Stand der Technik bekannten Dispersionen von silanolterminierten Polyurethanen aus, daß lediglich geringe Feststoffgehalte erzielt werden können. Solche geringen Feststoffgehalte sind jedoch mit einer Reihe von Nachteilen behaftet.

Die EP 0 818 496 A2 ist auf die Herstellung wässriger Emulsionen durch Mischen von (A) einer vorgeformten, wässrigen Emulsion umfassend Wasser, Partikel einer Vielzahl von silanolmodifizierten organischen Polymermolekülen dispergiert in Wasser und einem Tensid, (B) einem funktionalisierten Silan und (C) einem Organozinnkatalysator gerichtet.

Die EP 0 315 006 A2 betrifft wässrige, als Beschichtungsmittel verwendbare Polymerdispersionen mit an Polyurethane gebundenen Silanolgruppen.

In der EP 0 763 582 A1 wird die Verwendung von Polymerdispersionen silanolhaltiger Vinylpolymere in der Herstellung von Beschichtungen und Beschichtungsmitteln beschrieben.

Die EP 0 163 214 A2 beschreibt die Verwendung von Polymerdispersionen silanolhaltiger Polyurethane in der Herstellung von Beschichtungen, Beschichtungsmitteln und Klebstoffen.

In der DE 44 13 562 A1 wird die Verwendung von Polymerdispersionen silanolhaltiger Polyurethane in der Herstellung von Beschichtungen und Beschichtungsmitteln offenbart.

Gegenstand der vorliegenden Erfindung ist damit die Verwendung einer Polymerdispersion, enthaltend Wasser, mindestens ein erstes organisches Polymeres das frei von ionischen Gruppen ist und mindestens eine Gruppe der allgemeinen Formel I

-A-Si(Z)ₙ(OH)₃₋ₙ (I),

worin A für CH₂ oder für einen linearen oder verzweigten, gesättigten oder ungesättigten Alkylenrest mit 2 bis etwa 12 C-Atomen oder für einen Arylenrest mit etwa 6 bis etwa 18 C-Atomen oder einen Arylenalkylenrest mit etwa 7 bis etwa 19 C-Atomen, Z für CH₃, O-CH₃ oder für einen linearen oder verzweigten, gesättigten oder ungesättigten Alkylrest oder Alkoxyrest mit 2 bis etwa 12 C-Atomen und n für 0, 1, oder 2 steht, oder ein Kondensationsprodukt mindestens zwei solcher Gruppen, aufweist und ein weiteres organisches Polymeres oder ein Gemisch aus zwei oder mehr weiteren organischen Polymeren, als Dichtmasse.

Als organische Polymere, die mindestens eine Gruppe der allgemeinen Formel I aufweisen, eignen sich alle organischen Polymere, die mit mittels geeigneter Methoden in Wasser dispergierbar sind. In einer bevorzugten Ausführungsform der Erfindung enthält die Zusammensetzung als organisches Polymeres ein Polymeres ausgewählt aus der Gruppe bestehend aus Polyurethanen, Polyestern, Polyamiden, Polyethern, Polyacrylsäureestern, Polymethacrylsäureestern, Polystyrol, Polybutadien, Polyethylen, Polyvinylestern, Ethylen/α-Olefincopolymeren, Styrol/Butadiencopolymeren, Styrol/Acrylnitrilcopolymeren, EthylenNinylacetatcopolymeren, oder ein Gemisch aus zwei oder mehr der genannten Polymeren.

Die genannten Polymeren können, soweit möglich, mit löslich machenden Gruppen, d. h., in Wasser dissoziierbaren Gruppen, ausgerüstet sein. In einer bevorzugten Form der Erfindung weisen die organischen Polymeren jedoch entweder keine in Wasser dissoziierbaren Gruppen auf oder, sofern solche Gruppen vorliegen, sind die Bedingungen in der Polymerdispersion so gewählt, daß die in Wasser dissoziierbaren Gruppen nicht, oder nur in untergeordnetem Maße, in dissoziierter Form vorliegen.

Unter einer "in Wasser dissoziierbaren Gruppe" wird im Rahmen des vorliegenden Textes eine funktionelle Gruppe verstanden, die in einer sauren, neutralen oder basischen wäßrigen Lösung in ein Anion und ein Kation dissoziiert.

In einer bevorzugten Ausführungsform der Erfindung wird als organisches Polymeres ein Polyurethan eingesetzt. Geeignete Polyurethane sind beispielsweise unter Verwendung der folgenden Bausteine herstellbar:
a) mindestens ein Polyisocyanat,
b) mindestens ein Polyol,
c) mindestens ein Alkoxysilan der allgemeinen Formel II

   X-A-Si(Z)ₙ(OR)₃₋ₙ, (II),

   worin X für einen Rest mit mindestens einer mit Isocyanaten reaktiven funktionellen Gruppe, beispielsweise mindestens einer OH-, SH-, NH- oder COOH-Gruppe oder mindestens einer mit OH-Gruppen reaktiven Gruppe, beispielsweise mindestens einer Carboxyl-, Anhydrid-, NCO- oder Oxirangruppe, oder einem Gemisch aus zwei oder mehr solcher Gruppen, A für CH₂ oder für einen linearen oder verzweigten, gesättigten oder ungesättigten Alkylenrest mit 2 bis etwa 12 C-Atomen oder für einen Arylenrest mit etwa 6 bis etwa 18 C-Atomen oder einen Arylenalkylenrest mit etwa 7 bis etwa 19 C-Atomen oder einen mit Alkyl-, Cycloalkyl- oder Arylgruppen substituierten Siloxanrest mit etwa 1 bis etwa 20 Si-Atomen, Z für CH₃, O-CH₃ oder für einen linearen oder verzweigten, gesättigten oder ungesättigten Alkylrest oder Alkoxyrest mit 2 bis etwa 12 C-Atomen, R für CH₃ oder einen linearen oder verzweigten, gesättigten oder ungesättigten Alkylrest mit 2 bis etwa 12 C-Atomen und n für 0, 1 oder 2 steht.

Gegebenenfalls können zusätzlich bis zu etwa 20 Gew.-% Kettenverlängerungsmittel (Baustein d), bezogen auf das Polyurethan-Gewicht eingesetzt werden.

Geeignete Isocyanate (Baustein a) sind beliebige organische Verbindungen, die im Durchschnitt mehr als eine, insbesondere 2 lsocyanatgruppen aufweisen.

Vorzugsweise werden Diisocyanate Q(NCO)₂ eingesetzt, wobei Q für einen aliphatischen, gegebenenfalls substituierten Kohlenwasserstoffrest mit 4 bis etwa 12 Kohlenstoffatomen, einen gegebenenfalls substituierten cycloaliphatischen Kohlenwasserstoffrest mit 6 bis etwa 15 Kohlenstoffatomen, einen gegebenenfalls substituierten aromatischen Kohlenwasserstoffrest mit 6 bis etwa 15 Kohlenstoffatomen oder einen gegebenenfalls substituierten araliphatischen Kohlenwasserstoffrest mit 7 bis etwa 15 Kohlenstoffatomen steht. Beispiele für solche Diisocyanate sind Tetramethylendiisocyanat, Hexamethylendiisocyanat (HDI), Dodecamethylendiisocyanat, Dimerfettsäurediisocyanat, 1,4-Diisocyanatocyclohexan, 1-lsocyanato-3,3,5-trimethyl-5-isocyanato-methylcyclohexan (lsophoiondiisocyanat, IPDI), 4,4'-Diisocyanato-dicyclohexylmethyl, 4,4'-Diisocyanatodicyclohexylpropan-2,2, 1,3- und 1,4-Diisocyanato-benzol, 2,4- oder 2,6-Diisocyanato-toluol (2,4- oder 2,6-TDI) oder deren Gemisch, 2,2'-, 2,4 oder 4,4'-Diisocyanato-diphenylmethan (MDI), Tetramethylxylylendiisocyanat (TMXDI), p-Xylylendiisocyanat, sowie aus diesen Verbindungen bestehende Gemische.

Bevorzugt werden aliphatische Diisocyanate, insbesondere m- und p-Tetramethylxylylendiisocyanat (TMXDI) und lsophorondiisocyanat (IPDI).

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, lsocyanuratgruppen, Urethangruppen oder Biuretgruppen aufweisende Polyisocyanate anteilig mit zu verwenden.

Als Baustein (b) eignen sich OH-terminierte Polyole oder Polyolmischungen, wie sie dem Fachmann für Polyurethanherstellung bekannt sind und üblicherweise bei der Herstellung von Polyurethanen eingesetzt werden können. Im Rahmen der vorliegenden Erfindung können Polyole aus der Gruppe der Polyetherpolyole, Polyesterpolyole, Polyetheresterpolyole, Polyalkylendiole, Polycarbonate oder Polyacetale, oder ein Gemisch aus zwei oder mehr davon, mit jeweils 2, 3, 4 oder mehr OH-Gruppen eingesetzt werden.

Die genannten Polyole und ihre Herstellung sind aus dem Stand der Technik bekannt. So können beispielsweise Polyesterpolyole durch Reaktion von Dicarbonsäuren mit Diolen oder höheren Polyolen oder einem Gemisch von Diolen und höheren Polyolen oder einem Überschuß an Diolen oder höheren Polyolen oder deren Gemisch, sowie durch Ringöffnung von epoxidierten Estern, beispielsweise von epoxidierten Fettsäureestern, mit Alkoholen hergestellt werden. Auch Polycaprolactondiole, beispielsweise herstellbar aus ε-Caprolacton und Diolen oder höheren Polyolen sind als Polyesterpolyole geeignet. Im Rahmen der vorliegenden Erfindung sind beispielsweise Polyesterpolyole einsetzbar, die aus niedermolekularen Dicarbonsäuren wie Bernsteinsäure, Glutarsäure, Adipinsäure, lsophthalsäure, Terephthalsäure oder Phthalsäure, oder einem Gemisch aus zwei oder mehr davon, mit einem Überschuß an linearen oder verzweigten, gesättigten oder ungesättigten aliphatischen Diolen mit etwa 2 bis etwa 12 Kohlenstoffatomen erhältlich sind. Gegebenenfalls kann bei der Herstellung der Polyesterpolyole noch ein geringer Anteil an höherwertigen Alkoholen vorliegen, hierzu zählen beispielsweise Glyzerin, Trimethylolpropan, Triethylolpropan, Pentaerythrit oder Zuckeralkohole, wie Sorbit, Mannit oder Glucose.

Als Polyacetale seien beispielsweise die Polykondensationsprodukte aus Formaldehyd und Diolen oder Polyolen oder deren Gemischen in Gegenwart saurer Katalysatoren genannt.

Polyalkylendiole wie Polybutadiendiol sind kommerziell erhältliche Produkte, die in verschiedenen Molekulargewichten angeboten werden. Sie eignen sich im Rahmen der vorliegenden Erfindung beispielsweise als Polyolkomponente bei der Herstellung von Polyurethanen, wie sie in den erfindungsgemäßen Dispersionen eingesetzt werden können.

Polyetherpolyole können beispielsweise durch Homo-, Co- oder Blockpolymerisation von Alkylenoxiden wie Ethylenoxid, Propylenoxid oder Butylenoxid, oder Gemischen aus zwei oder mehr davon, oder durch Umsetzung von Polyalkylenglykolen mit di- oder trifunktionellen Alkoholen erhalten werden. Ebenso geeignet sind die polymerisierten Ringöffnungsprodukte von cyclischen Ethern, beispielsweise Tetrahydrofuran, mit entsprechenden Alkoholen als Startermoleküle. Wenn als Startermoleküle Esterverbindungen, beispielsweise Oligo- oder Polyester eingesetzt werden, so erhält man Polyetherester, die sowohl Ether als auch Estergruppen aufweisen. Die genannten Verbindungen sind ebenfalls als Polyolkomponente bei der Herstellung von Polyurethanen, wie sie im Rahmen der vorliegenden Erfindung in den erfindungsgemäßen Dispersionen eingesetzt werden können, verwendbar.

In einer bevorzugten Ausführungsform der vorliegenden Erfindung werden als Polyetherpolyole bei der Herstellung von Polyurethanen die Alkoxylierungsprodukte, insbesondere die Ethoxylierungs- oder Propoxylierungsprodukte di- oder trifunktioneller Alkohole eingesetzt. Als di- oder trifunktionelle Alkohole werden insbesondere Alkohole ausgewählt aus der Gruppe bestehend aus Ethylenglykol, Diethylenglykol, Triethylenglykol, 1,2-Propandiol, Dipropylenglykol, den isomeren Butandiolen, Hexandiolen, Octandiolen, technischen Gemischen von Hydroxyfettalkoholen mit 14 bis 22 C-Atomen, insbesondere Hydroxystearylalkohol, Trimethylolpropan oder Glycerin oder Gemische aus zwei oder mehr der genannten Alkohole eingesetzt.

Im Rahmen einer weiteren bevorzugten Ausführungsform der Erfindung, werden zur Herstellung der Polyurethane Polyole mit einem mittleren Molekulargewicht von etwa 300 bis etwa 80.000, insbesondere von etwa 1.000 bis etwa 40.000 eingesetzt. Gute Eigenschaften für die resultierenden erfindungsgemäßen Dispersionen ergeben sich beispielsweise bei Verwendung von OH-terminierten, linearen Polyolen, beispielsweise von Gemischen aus zwei oder mehr Polyolen, die wenigstens anteilsweise Polypropylenglykol mit einem Molekulargewicht von etwa 2.000 bis 30.000 enthalten.

Die zur Herstellung der Polyurethane eingesetzten OH-terminierten Polyole enthalten in einer bevorzugten Ausführungsform der vorliegenden Erfindung Polypropylenglykol mit einem mittleren Molekulargewicht von etwa 2.000 bis etwa 40.000 in einem Anteil von mehr als 50 Gew.-%, vorzugsweise mehr als 70 Gew.-%, bezogen auf die gesamte Polyolmischung. In einer weiteren Ausführungsform der Erfindung können auch Mischungen verschiedener Polypropylenglykole mit unterschiedlichen Molekulargewichten eingesetzt werden.

Neben den oben genannten Polyolen können als Baustein b) anteilig, vorzugsweise in untergeordneten Mengen, auch lineare oder verzweigte, gesättigte oder ungesättigte aliphatische, monofunktionelle Alkohole, insbesondere Methanol, Ethanol, die Isomeren des Propanols, Butanols oder Hexanols sowie Fettalkohole mit etwa 8 bis etwa 22 C-Atomen, beispielsweise Octanol, Decanol, Dodecanol, Tetradecanol, Hexadecanol oder Octadecanol eingesetzt werden. Die genannten Fettalkohole sind beispielsweise durch Reduktion von natürlichen Fettsäuren erhältlich und können sowohl als Reinsubstanzen als auch in Form ihrer technischen Gemische eingesetzt werden. Gut geeignet sind beispielsweise lineare Monoalkohole und insbesondere solche mit etwa 4 bis etwa 18 C-Atomen. Anstelle der linearen oder verzweigten aliphatischen Alkohole oder in Abmischung mit diesen sind auch Monoalkylpolyetheralkohole unterschiedlichen Molekulargewichts, vorzugsweise in den Molekulargewichtsbereichen von etwa 1.000 bis etwa 2.000 einsetzbar.

Ebenfalls als Baustein b) einsetzbar sind mehrwertige Alkohole, wie sie beispielsweise durch Hydrierung von di- oder oligomeren Fettsäuren oder deren Estern erhältlich sind, Rizinusöl, mit C₁₋₄-Alkylalkoholen, ringgeöffnete, epoxidierte Fette oder Öle, C₁₂₋₁₈-Fettsäurediethanolamide, Monoglyceride von aliphatischen C₈₋₂₂-Fettsäuren, Polypropylenglykole oder Polysiloxane mit endständigen OH-Gruppen, oder Gemische aus zwei oder mehr der genannten Verbindungen, einsetzbar.

Die Herstellung mehrwertiger Alkohole durch Hydrierung von di- oder oligomeren Fettsäuren oder deren Estern kann beispielsweise gemäß DE 17 68 313 erfolgen. Als Edukte eignen sich Polymerisationsprodukte von ein- oder mehrwertigen, ein- oder mehrfach ungesättigten Fettsäuren oder deren Estern, oder Gemische aus zwei oder mehr davon. Die gewünschtenfalls neben ungesättigten Komponenten auch gesättigte Komponenten enthalten können. Hierzu zählen beispielsweise die Polymerisationsprodukte von Ölsäure, Linolsäure, Linolensäure, Palmitoleinsäure, Elaidinsäure oder Erucasäure oder von Estern, hergestellt aus den genannten Fettsäuren und vorzugsweise niederen aliphatischen Alkoholen (C₁₋₄-Alkohole) oder von aus Fetten oder Ölen wie Talk, Olivenöl, Sonnenblumenöl, Sojaöl oder Baumwollsaatöl gewonnene Fettsäuregemische. In Abhängigkeit von den gewählten Reaktionsbedingungen werden während den nach bekannten Verfahren durchgeführten Polymerisationen neben Dimeren auch wechselnde Mengen an monomeren und oligomeren Fettsäuren oder Fettsäureestern gebildet. Enthalten die Polymerisationsprodukte größere Mengen monomerer Fettsäuren oder deren Ester, so ist es gegebenenfalls zweckmäßig, diese erst nach der Hydrierung als alkoholische Monomerbestandteile destillativ abzutrennen. Die Hydrierung di- oder oligomerer Fettsäuren und deren Ester werden beispielsweise in Gegenwart von kupfer- oder zinkhaltigen Katalysatoren in üblichen kontinuierlich arbeitenden Druckhydrierapparaturen mit Gaskreislauf durchgeführt.

Mit C₁₋₄-Alkylalkoholen ringgeöffnete, expoxydierte Fette oder Öle lassen sich aus Fetten oder Ölen mit einem hohen Gehalt an ungesättigten Fettsäurebestandteilen, beispielsweise Olivenöl, Sojaöl oder Sonnenblumenöl, in an sich bekannter Weise herstellen. Hierzu werden Fette oder Öle, beispielsweise gemäß dem in der DE-PS 857 364 beschriebenen Verfahren, durch Umsetzung mit Peressigsäure in Anwesenheit saurer Katalysatoren oder mit in situ aus Ameisensäure und Wasserstoffperoxid gebildeter Perameisensäure epoxidiert. Anschließend werden die Oxiranringe der epoxidierten Fette oder Öle mit niedermolekularen Alkoholen, beispielsweise mit Methanol, Ethanol, Propanol oder Butanol, unter Ausbildung von OH-Gruppen aufgespalten.

C₁₂₋₁₈-Fettsäurediethanolamide, herstellbar durch Umsetzung von C₁₂₋₁₈-Fettsäuren wie Laurinsäure, Myristinsäure, Kokosfettsäure oder Ölsäure mit Diethanolamin (siehe zum Beispiel Kirk-Othmer: "Encyclopaedia of Chemical Technology, Band 22, Seiten 373-376, John Wiley and Sons, New York 1983) sowie Monoglyceride von C₈₋₂₂-Fettsäuren, herstellbar durch Umsetzung von Fetten oder Ölen mit Glyzerin, beispielsweise Laurinsäure-, Kokosfettsäure-, Stearinsäure-, Ölsäure- oder Talgfettsäuremonoglycerid (siehe Kirk-Othmer: "Encyclopaedia of Chemical Technology, Band 22, Seiten 367-368, John Wiley and Sons, New York 1983) sind handelsübliche Produkte und ebenfalls als Komponente b), oder zumindest als deren Bestandteil, bei der Herstellung der Polyurethane verwendbar. Polysiloxane mit endständigen OH-Gruppen werden beispielsweise von der Firma Wacker und Polypropylenglykole beispielsweise von der Firma Dow Chemicals angeboten.

Als Kettenverlängerungsmittel, wie sie im Rahmen der vorliegenden Erfindung zur Herstellung der Polyurethane als Baustein d) eingesetzt werden können, eignen sich beispielsweise mehrwertige Alkohole wie Ethylenglykol, Propylenglykol, Propandiol-1,3, Butandiol-1,4, Hexandiol-1,6, Trimethylolpropan, Glyzerin, Pentaerythrit, Sorbit, Mannit oder Glucose. Auch niedermolekulare Polyesterdiole wie Bernsteinsäure-, Glutarsäure- oder Adipinsäure-bis-(hydroxyethyl)-ester, oder ein Gemisch aus zwei oder mehr davon, oder niedermolekulare, Ethergruppen aufweisende Diole, wie Diethylenglykol, Triethylenglykol, Tetraethylenglykol, Dipropylenglykol, Tripropylenglykol oder Tetrapropylenglykol können als Baustein d) mit verwendet werden. Ebenfalls geeignet sind Amine wie Ethylendiamin, Hexamethylendiamin, Piperazin, 2,5-Dimethylpiperazin, 1-Amino-3-aminomethyl-3,5,5-trimethylcyclohexan (Isophorondiamin, IPDA), 4,4'-Diamino-dicyclohexylmethan, 1,4-Diaminocyclohexan, 1,2-Diaminopropan, Hydrazin, Hydrazinhydrat, Aminosäurehydrazide wie 2-Aminoessigsäurehydrazid oder Bis-hydrazide wie Bernsteinsäurebishydrazid. Die aminischen bzw. hydrazinischen Bausteine d), die keinen tertiären Stickstoff aufweisen, können zur Herstellung der Polyurethane auch in blockierter Form, d. h., in Form der entsprechenden Ketimine, Ketazine oder Aminsalze eingesetzt werden. Oxazolidine stellen verkappte Diamine dar, die zur Herstellung der Polyurethane eingesetzt werden können. Die Mitverwendung von im Sinne einer Isocyanat-Polyadditionsreaktion tri- oder höherfunktionellen Verbindungen in geringen Anteilen ist zur Erzielung eines gewissen Verzweigungsgrades ebenso möglich wie die bereits erwähnte mögliche Mitverwendung von tri- oder höherfunktionellen Polyisocyanaten zum gleichen Zweck. Einwertige Alkohole wie n-Butanol oder n-Dodecanol und Stearylalkohol können in geringen Mengen als Anteil an Baustein b) mitverwendet werden.

Bei dem als Baustein c) einsetzbaren Alkoxysilan der allgemeinen Formel II steht X beispielsweise für einen Rest, der mindestens eine OH-, SH-, NH₂- oder Anhydridgruppe aufweist. In einer bevorzugten Ausführungsform der Erfindung steht X für OH, SH, H₂N-(CH₂)₂-NH, (HO-C₂H₄)₂N oder NH₂, A für CH₂, CH₂-CH₂ oder CH₂-CH₂-CH₂, Z steht für -CH₃ oder -CH₂-CH₃ und R steht für -CH₃, -CH₂-CH₃ oder - CH₂-CH₂-CH₃. Die Variable n steht in einer bevorzugten Ausführungsform der Erfindung für 0 oder 1.

Beispiele für als Baustein c) geeignete Ausgangsmaterialien sind H₂N-(CH₂)₃-Si(O-CH₂-CH₃)₃, HO-CH(CH₃)-CH₂-Si(OCH₃)₃, HO-(CH₂)₃-Si(O-CH₃)₃, HO-CH₂-CH₂-O-CH₂-CH₂-Si(OCH₃), (HO-C₂H₄)₂N-(CH₂)₃-Si(O-CH₃)₃, HO-(C₂H₄-O)₃-C₂H₄-N(CH₃)-(CH₂)₃-SI(O-C₄H₉)₃, H₂N-CH₂-C₆H₄-CH₂-CH₂-Si(O-CH₃)₃, HS-(CH₂)₃-Si(O-CH₃)₃, H₂N-(CH₂)₃-NH-(CH₂)₃-Si(OCH₃)₃, H₂N-CH₂-CH₂-NH-(CH₂)₂-Si(O-CH₃)₃, H₂N-(CH₂)₂-NH-(CH₂)₃-Si(OCH₃)₃, HO-CH(C₂H₅)-CH₂-Si(OC₂H₅)₃, HO-(CH₂)₃-Si(O-C₂H₅)₃, HO-CH₂-CH₂-O-CH₂-Si(OC₂H₅)₃, (HO-C₂H₄)₂-N-(CH₂)₃-Si(O-C₂H₅)₃, H₂N-CH₂-C₆H₄-CH₂-CH₂-Si(O-C₂H₅)₃, HS-(CH₂)₃-Si(O-C₂H₅)₃, H₂N-(CH₂)₃-NH-(CH₂)₃-Si(OC₂H₅)₃, H₂N-CH₂-CH₂-NH-(CH₂)₂-Si(O-C₂H₅)₃, H₂N-(CH₂)₂-NH-(CH₂)₃-Si(OC₂H₅)₃.

Die Umsetzung des Bausteins a) kann in Gegenwart eines organischen, beispielsweise mit Wasser mischbaren inerten Lösemittels wie Aceton oder N-Methylpyrrolidon erfolgen. Es wird in der Regel nach der Überführung des Polyurethans in die wäßrige Phase, d. h., nach Dispersion, destillativ entfernt. Vorteilhafterweise wird das Polyurethan jedoch ohne Lösemittel hergestellt.

Hierzu wird zunächst der Baustein a) mit dem Baustein b) (Polyolkomponente) zu einem Polyurethan-Präpolymeren mit endständigen NCO-Gruppen umgesetzt. Anschließend werden alle oder nur ein Teil der NCO-Gruppen des Präpolymeren mit dem Alkoxysilanbaustein c) umgesetzt. Danach wird das alkoxysilanterminierte und eventuell gleichzeitig noch über freie NCO-Gruppen verfügende Polyurethan-Präpolymere durch Zusatz von Wasser, das gegebenenfalls zusätzlich ein Kettenverlängerungsmittel enthalten kann, in die wäßrige Phase überführt. Die Temperatur der Umsetzung in der ersten Stufe liegt im allgemeinen bei etwa 5 bis etwa 160 °C, vorzugsweise bei etwa 50 bis etwa 120 °C. Die Umsetzung des Präpolymeren mit dem Alkoxysilan wird bei etwa 50 bis etwa 120 °C durchgeführt. Zur Überführung des alkoxysilanterminierten Polyurethans in die wäßrige Dispersion sollte vorteilhafterweise ein Emulgator oder ein Gemisch aus zwei oder mehr Emulgatoren im Polyurethan oder im Wasser vorliegen. Es können hierbei anionische, kationische, nichtionische oder ampholytische Emulgatoren oder Gemische aus zwei oder mehr dieser Emulgatoren verwendet werden. Beispiele für anionische Emulgatoren sind Alkylsulfate, insbesondere solche mit einer Kettenlänge von etwa 8 bis etwa 18 C-Atomen, Alkyl- und Alkarylethersulfate mit etwa 8 bis etwa 18 C-Atomen im hydrophoben Rest und 1 bis etwa 40 Ethylenoxid (EO) oder Propylenoxid (PO) Einheiten, oder deren Gemisch, im hydrophilen Teil des Moleküls, Sulfonate, insbesondere Alkylsulfonate, mit etwa 8 bis etwa 18 C-Atomen, Alkylarylsulfonate mit etwa 8 bis etwa 18 C-Atomen, Tauride, Ester und Halbester der Sulfobernsteinsäure mit einwertigen Alkoholen oder Alkylphenolen mit 4 bis etwa 15 C-Atomen, die gegebenenfalls mit 1 bis etwa 40 EO-Einheiten ethoxyliert sein können, Alkali- und Ammoniumsalze von Carbonsäuren, beispielsweise von Fettsäuren oder Harzsäuren mit etwa 8 bis etwa 32 C-Atomen oder deren Gemischen, Phosphorsäurepartialester und deren Alkali- und Ammoniumsalze.

In einer bevorzugten Ausführungsform der Erfindung werden als anionische Emulgatoren Alkyl- und Alkarylphosphate mit etwa 8 bis etwa 22 C-Atomen im organischen Rest, Alkylether- oder Alkaryletherphosphate mit etwa 8 bis etwa 22 C-Atomen im Alkyl- bzw. Alkarylrest und 1 bis etwa 40 EO-Einheiten eingesetzt.

Beispiele für nichtionische Emulgatoren sind Polyvinylalkohol, der noch 5 bis etwa 50 %, beispielsweise etwa 8 bis etwa 20 % Acetateinheiten und einen Polymerisationsgrad von etwa 200 bis etwa 5.000 aufweist, Alkylpolyglykolether, vorzugsweise solche mit etwa 8 bis etwa 40 EO-Einheiten und Alkylresten mit etwa 8 bis etwa 20 C-Atomen, Alkylarylpolyglykolether, vorzugsweise solche mit etwa 8 bis etwa 40 EO-Einheiten und etwa 8 bis etwa 20 C-Atomen in den Alkyl- oder Arylresten, Ethylenoxid/Propylenoxid (EO/PO)-Blockcopolymere, vorzugsweise solche mit etwa 8 bis etwa 40 EO- bzw. PO-Einheiten, Additionsprodukte von Alkylaminen mit Alkylresten von etwa 8 bis etwa 22 C-Atomen mit Ethylenoxid oder Propylenoxid, Fett- und Harzsäuren mit etwa 6 bis etwa 32 C-Atomen, Alkylpolyglykoside mit linearen oder verzweigten, gesättigten oder ungesättigten Alkylresten mit im Mittel etwa 8 bis etwa 24 C-Atomen und einem Oligoglykosidrest mit etwa 1 bis etwa 10 Hexose- oder Pentoseeinheiten im Mittel oder Gemische aus zwei oder mehr davon, Naturstoffe und deren Derivate wie Lecithin, Lanolin, Sarkosin, Cellulose, Cellulosealkylether und Carboxyalkylcellulosen, deren Alkylgruppen jeweils 1 bis etwa 4 C-Atome aufweist, polare Gruppen enthaltende lineare Organo(poly)siloxane, insbesondere solche mit Alkoxygruppen mit bis zu etwa 24 C-Atomen und bis zu etwa 40 EO- oder PO-Gruppen.

Beispiele für kationische Emulgatoren sind Salze von primären, sekundären oder tertiären Fettaminen mit etwa 8 bis etwa 24 C-Atomen mit Essigsäure, Schwefelsäure, Salzsäure oder Phosphorsäuren, quaternäre Alkyl- und Alkylbenzolammoniumsalze, insbesondere solche, deren Alkylgruppen etwa 6 bis etwa 24 C-Atome aufweisen, insbesondere die Halogenide, Sulfate, Phosphate oder Acetate, oder Gemische aus zwei oder mehr davon, Alkylpyridinium-, Alkylimidazolinium- oder Alkyloxazolidiniumsalze, insbesondere solche, deren Alkylkette bis zu etwa 18 C-Atome aufweist, beispielsweise die Halogenide, Sulfate, Phosphate oder Acetate, oder ein Gemisch aus zwei oder mehr davon.

Beispiele für ampholytische Emulgatoren sind langkettig substituierte Aminosäuren wie N-Alkyl-di(aminoethyl)glycin oder N-Alkyl-2-aminopropionsäuresalze, Betaine, wie N-(3-acylamidopropyl)-N,N-dimethylammoniumsalze mit einem C₈₋₁₈-Acylrest oder Alkylimidazoliumbetaine.

In einer bevorzugten Ausführungsform der vorliegenden Erfindung werden die folgenden Emulgatoren eingesetzt: die Alkalisalze, insbesondere das Na-Salz der C_{12/14}-Fettalkoholethersulfate, Alkylphenolethersulfate, insbesondere deren Alkali- oder NH₄-Salze, Na-n-Dodecylsulfat, Di-K-Ölsäuresulfonat (C₁₈), Na-n-alkyl-(C₁₀C₁₃)-benzolsulfonat, Na-2-Ethylhexylsulfat, NH₄-Laurylsulfat (C_{8/14}), Na-Laurylsulfat (C_{12/14}), Na-Laurylsulfat (C_{21/16}), Na-Laurylsulfat (C_{12/18}), Na-Cetylstearylsulfat (C_{16/18}), Na-Oleylcetylsulfat (C_{16/18}), Nonylphenolethoxylate, Octylphenolethoxylate, C_{12/14}-Fettalkoholethoxylate, Oleylcetylethoxylate, C_{16/18}-Fettalkoholethoxylate, Cetylstearylethoxylate, ethoxylierte Triglyceride, Sorbitanmonolaurat, Sorbitanmonooleat, Sorbitan-20EO-monooleat, Sorbitan-20EO- monostearat, Sulfobernsteinsäuremonoester-di-Na-Salz, Fettalkoholsulfosuccinatdi-Na-Salz, Dialkylsulfosuccinat-Na-Salz oder Di-Na-Sulfosuccinamat oder Gemische aus zwei oder mehr davon. Ebenfalls einsetzbar sind Gemische aus an- und nichtionischen Tensiden, Gemische nichtionischer Tenside, Alkylaryletherphosphate und deren saure Ester, Dihydroxystearinsäure-NH₄-Salz, lso-Eicosanol, Arylpolyglykolether, Glycerinmonostearat.

In einer weiteren bevorzugten Ausführungsform der vorliegenden Erfindung wird als organisches Polymeres ein Polyester oder ein Polycarbonat eingesetzt. Als Polyester oder als Polycarbonate sind alle Polyester oder Polycarbonate mit einem Molekulargewicht von mindestens etwa 200 g/mol geeignet. Die Herstellung solcher Polyester und Polycarbonate ist dem Fachmann bekannt.

In einer bevorzugten Ausführungsform der vorliegenden Erfindung wird als organisches Polymeres ein Polyester oder ein Gemisch aus zwei oder mehr Polyestern oder ein Gemisch aus einem oder mehreren Polyestern und einem Polyether oder einem Gemisch aus zwei oder mehr Polyethern, eingesetzt. Geeignete Polyester lassen sich beispielsweise durch Umsetzung von OH-Gruppen tragenden Polyesterpolyolen mit geeignet funktionalisierten Alkoxysilanverbindungen der allgemeinen Formel III

Y-A-Si(Z)ₙ(OR)₃₋ₙ, (III),

worin Y für einen Rest mit mindestens einer mit OH-Gruppen reaktiven funktionellen Gruppe, beispielsweise für mindestens eine NCO-Gruppe, Halogenidgruppe, Oxirangruppe, Säureanhydridgruppe oder Säurehalogenidgruppe, und A, Z, R und n für die bereits oben genannten Gruppen und Werte stehen.

Geeignete Polyesterpolyole sind beispielsweise durch Reaktion von Dicarbonsäuren mit Diolen oder höheren Polyolen oder einem Gemisch von Diolen und höheren Polyolen oder einem Überschuß an Diolen oder höheren Polyolen oder deren Gemisch, sowie durch Ringöffnung von epoxidierten Estern, beispielsweise von epoxidierten Fettsäureestern, mit Alkoholen erhältlich. Auch Polycaprolactondiole, beispielsweise herstellbar aus ε-Caprolacton und Diolen oder höheren Polyolen sind als Polyesterpolyole geeignet. Im Rahmen der vorliegenden Erfindung sind beispielsweise Polyesterpolyole einsetzbar, die aus niedermolekularen Dicarbonsäuren wie Bernsteinsäure, Glutarsäure, Adipinsäure, Isophthalsäure, Terephthalsäure oder Phthalsäure, oder einem Gemisch aus zwei oder mehr davon, mit einem Überschuß an linearen oder verzweigten, gesättigten oder ungesättigten aliphatischen Diolen mit etwa 2 bis etwa 12 Kohlenstoffatomen erhältlich sind. Gegebenenfalls kann bei der Herstellung der Polyesterpolyole noch ein geringer Anteil an höherwertigen Alkoholen vorliegen, hierzu zählen beispielsweise Glyzerin, Trimethylolpropan, Triethylolpropan, Pentaerythrit oder Zuckeralkohole, wie Sorbit, Mannit oder Glucose.

In Rahmen einer bevorzugten Ausführungsform der vorliegenden Erfindung geeignete Polyesterpolyole sind im wesentlichen linear und weisen beispielsweise ein Molekulargewicht von etwa 1.000 bis etwa 50.000 sowie eine OH-Zahl von etwa 10 bis etwa 200, beispielsweise etwa 20 bis etwa 80, auf. Geeignete im Handel erhältliche Polyesterpolyole sind beispielsweise Desmophen-2020-E, Desmophen-C-200, Baycoll-AD-2052 (Hersteller: Bayer AG) oder Ravecarb-106 oder -107(Hersteller: Fa. Enichem), oder Gemische aus zwei oder mehr davon.

Geeignete Alkoxysilanverbindungen der allgemeinen Formel III sind beispielsweise Cl-(CH₂)₃-Si(O-CH₂-CH₃)₃, Cl-CH(CH₃)-CH₂-Si(OC₃)₃, Cl-(CH₂)₃-Si(O-CH₃)₃, Cl-CH₂-CH₂-O-CH₂-CH₂-Si(OCH₃), (OCN-C₂H₄)₂N-(CH₂)₃-Si(O-CH₃)_{3,} OCN-(C₂H₄-O)₃-C₂H₄-N(CH₃)-(CH₂)₃-Si(O-C₄H₉)_{3,} Br-CH₂-C₆H₄-CH₂-CH₂-Si(O-CH₃)₃, Br-(CH₂)₃-Si(O-CH₃)₃, Cl-CH(C₂H₅)-CH₂-Si(OC₂H₅)₃, Cl-(CH₂)₃-Si(O-C₂H₅)₃, Br-(CH₂)₃-Si(O-C₂H₅)₃, , OCN-(CH₂)₃-Si(O-C₂H₆)₃, Cl-CH₂-CH₂-O-CH₂-Si(OC₂H₅)₃, (OCN-C₂H₄)₂-N-(CH₂)₃-Si(O-C₂H₅)₃ oder Cl-CH₂-C₆H₄-CH₂-CH₂-Si(O-C₂H₅)₃. oder Verbindungen, die an der entsprechenden Stelle beispielsweise eine Oxiran- oder Anhydridgruppe aufweisen wie (3-Triethoxysilylpropyl)succinanhydrid.

Ebenfalls geeignet sind entsprechende Alkoxysilanverbindungen der allgemeinen Formel III, die mehr als eine gegenüber OH-Gruppen reaktive funktionelle Gruppe aufweisen. Beispielsweise OCN-CH₂-CH(NCO)-(CH₂)₃-Si(O-CH₂-CH₃)₃, OCN-CH-(CH₂NCO)-CH₂-Si(OCH₃)₃, Cl-CH₂-CH(Cl)-(GH₂)₃-Si(O-CH₂-CH₃)₃, Cl-CH-(CH₂Cl)-CH₂-Si(OCH₃)₃, Cl-CH₂-Cl-(Cl)-CH₂-CH₂-O-CH₂-CH₂-Si(OCH₃), (Cl-C₂H₄)₂N-(CH₂)₃-Si(O-CH₃)₃, Cl-CH(C₂H₄Cl)-CH₂-Si(OC₂H₅)₃ oder Verbindungen, die an der entsprechenden Stelle beispielsweise eine Oxiran- oder Anhydridgruppe aufweisen.

Die silangruppenhaltigen Polyester oder Polycarbonate werden in einer bevorzugten Ausführungsform der vorliegenden Erfindung durch Dispersion in Wasser in die Dispersionen überführt. Wenn die Polyester oder Polycarbonate keine in Wasser dissoziierenden Gruppen aufweisen, also nicht löslich oder "selbstdispergierend" sind, ist es vorteilhaft, wenn einer der oben bereits genannten Emulgatoren, oder ein Gemisch aus zwei oder mehr der genannten Emulgatoren im Wasser vorliegt.

In einer weiteren bevorzugten Ausführungsform werden als organische Polymere Polyether eingesetzt. Zu den im Rahmen der vorliegenden Erfindung geeigneten Polyethern zählen die Alkylenoxidaddukte von geeigneten Starterverbindungen, beispielsweise Wasser, Ethylenglykol, Diethylenglykol, Propylenglykol, Dipropylenglykol, Glycerin, 1,2,6-Hexantriol, 1,1,1-Trimetylolethan, Trimethylolpropan, Pentaerythrit, Sorbit, Mannit oder Glucose oder höheren Polysacchariden. Im Rahmen einer bevorzugten Ausführungsform der Erfindung werden Polyether eingesetzt, die durch Polyaddition von Ethylenoxid oder Propylenoxid oder deren Gemisch an die genannten Starterverbindungen, insbesondere die Addukte von Propylenoxid. Geeignete Polyether werden beispielsweise in der EP-B 0 184 829 und den darin genannten Dokumenten beschrieben, die, insoweit sie sich mit Polyethern befassen, Bestandteil der Offenbarung des vorliegenden Textes sind.

Die Polyether weisen in einer bevorzugten Ausführungsform der Erfindung ein Molekulargewicht von etwa 300 bis etwa 80.000 auf. Im Rahmen einer bevorzugten Ausführungsform der Erfindung werden Polyether eingesetzt, die eine Viskosität (23 °C, DVU-E-typ, Spindel 9) von etwa 0,5 bis etwa 30 Pa*s und einen pH-Wert von etwa 5 bis etwa 9 aufweisen. In einem Temperaturbereich von etwa 0 °C bis etwa 80 °C weisen die bevorzugt eingesetzten Polyether eine Viskosität von etwa 0,1 bis etwa 120 Pa*s auf.

Die silanterminierten Polyether werden entsprechend durch Umsetzung der Polyetherpolyole mit geeignet funktionalisierten Silanen hergestellt. Geeignete Silane sind beispielsweise die oben bereits genannten Alkoxysilanverbindungen der allgemeinen Formel III. Geeignete silanterminierte Polyether werden beispielsweise von der Firma Kaneka unter dem Namen MS Polymer® vertrieben.

Ebenfalls im Rahmen der vorliegenden Erfindung geeignet sind Polyether mit Aminogruppen (beispielsweise Jeffamine) und Silylgruppen die eine Funktionalität von etwa 2 bis etwa 6 und ein Molekulargewicht von etwa 500 bis etwa 50.000, beispielsweise etwa 1000 bis etwa 20.000 aufweisen.

In einer weiteren bevorzugten Ausführungsform der Erfindung werden als organische Polymere Polyamide eingesetzt. Polyamide lassen sich in bekannter Weise durch Umsetzung von Dicarbonsäuren mit Diaminen herstellen. Geeignete Dicarbonsäuren sind beispielsweise die im Rahmen dieses Textes bereits erwähnten, zur Herstellung von Polyestern geeigneten Dicarbonsäuren, insbesondere die Dimerfettsäuren. In einer bevorzugten Ausführungsform der vorliegenden Erfindung werden Polyamide eingesetzt, die durch Umsetzung von Dimerfettsäuren oder deren Alkylestern mit Alkoholen mit 1 bis etwa 6 C-Atomen und Alkylendiaminen, insbesondere Alkylendiaminen mit 2 bis etwa 10 C-Atomen, erhältlich sind.

Die Ausstattung der Polyamide mit entsprechenden Alkoxysilangruppen erfolgt in der bereits oben für Polyether oder Polyester beschriebenen Art.

In einer weiteren bevorzugten Ausführungsform der vorliegenden Erfindung werden als organische Polymere Polyacrylsäureester oder Polymethacrylsäureester eingesetzt. Polyacrylsäureester und Polymethacrylsäureester lassen sich in einer dem Fachmann bekannten Art und Weise durch radikalische Polymerisation von entsprechenden Estern der Acrylsäure oder Methacrylsäure erhalten. Geeignete Ester der Acrylsäure oder der Methacrylsäure sind beispielsweise die Methylester, Ethylester, Propylester, Butylester, Pentylester, Hexylester, Heptylester, Octylester, Nonylester oder Decylester. Die Einbringung von Alkoxysilangruppen in das organische Polymere kann beispielsweise dadurch geschehen, daß ein entsprechend funktionalisiertes Alkoxysilan mit in die Polymerkette einpolymerisiert wird, wie es beispielsweise in der EP-A 0 818 496 beschrieben wird, deren Offenbarung als Bestandteil des vorliegenden Textes angesehen wird. Es ist jedoch ebenso möglich, das organische Polymere vor Einbringung der Alkoxysilangruppen entsprechend zu funktionalisieren und anschließend in einer polymeranalogen Reaktion mit einem entsprechend funktionalisierten Alkoxysilan, beispielsweise einem Alkoxysilan der allgemeinen Formel III, umzusetzen. Dies kann beispielsweise dadurch geschehen, daß im organischen Polymeren ein bestimmter Prozentsatz an hydroxyfunktionalisierten Acrylsäureestern oder Methacrylsäureestern einpolymerisiert wird. Zu diesem Zweck geeignete Monomere sind beispielsweise die Hydroxyethyl, Hydroxypropyl, Hydroxybutyl, Hydroxypentyl, Hydroxyhexyl, Hydroxyheptyl oder Hydroxyoctylester der Acrylsäure oder Methacrylsäure.

Ebenfalls zur Funktionalisierung von Polyacrylatestem oder Polymethacrylatestern mit Silylgruppen geeignet ist die Pfropfreaktion. Unter Pfropfreaktionen werden Reaktionen verstanden, bei denen Pfropfpolymere gebildet werden. Pfropfpolymere entstehen z. B. dann, wenn olefinisch ungesättigte Verbindungen in Gegenwart vorgefertigter Polymerer, die als Makroinitiatoren u. damit gleichzeitig als Pfropfsubstrate dienen, radikalisch initiiert umgesetzt werden. Die Initiierung kann beispielsweise durch chemische, oder thermische Spaltung von Peroxid- oder Diazo-Gruppen an der Polymerkette der Pfropfsubstrate sowie durch Einwirkung von Strahlen initiiert werden.

Die im Rahmen der vorliegenden Erfindung als Polyacrylatester oder Polymethacrylatester mit Silylgruppen eingesetzten Verbindungen weisen ein Molekulargewicht von mindestens etwa 20C, beispielsweise mindestens etwa 300 oder mindestens etwa 500 auf. In einer bevorzugten Ausführungsform der vorliegenden Erfindung werden Polyacrylatester oder Polymethacrylatester mit Silylgruppen, die ein Molekulargewicht von weniger als etwa 1000 aufweisen, zusammen mit einem oder mehreren der im Rahmen des vorliegenden Textes beschriebenen Silylgruppen tragenden Polymeren zusammen eingesetzt.

Ebenfalls im Rahmen der vorliegenden Erfindung geeignet ist sind Polyolefine wie Polyethylen, die mindestens eine, beispielsweise zwei oder mehr Silylgruppen aufweisen.

Als olefinisch ungesättigte Silylderivate eignen sich insbesondere die Trialkoxyvinylsilane.

Die genannten Silylgruppen tragenden Polymeren können in den Zubereitungen alleine oder als Gemisch aus zwei oder mehr davon eingesetzt werden.

Die Herstellung von Dispersionen der genannten organischen Polymeren kann beispielsweise durch entsprechende Dispersion der Polymeren in Wasser erfolgen, bis der gewünschte Festkörpergehalt erreicht ist. Es ist bei bestimmten Systemen, beispielsweise bei Acrylat- oder Methacrylatdispersionen ebenso möglich, die Herstellung der Polymeren im Rahmen einer Emulsionspolymerisation oder Dispersionspolymerisation durchzuführen und den Festkörpergehalt der resultierenden Dispersion durch verringern der kontinuierlichen Phase bis auf den gewünschten Wert von mindestens etwa 60 Gew.-% zu erhöhen.

Weitere geeignete organische Polymere sind beispielsweise Polybutadiene, wie sie durch Polymerisation von Butadien erhältlich sind, Eine Funktionalisierung der Butadiene mit Alkoxysilangruppen kann entsprechend der bereits bei den Polyacrylaten und Polymethacrylaten genannten Methodik, beispielsweise durch Pfropfreaktion, erfolgen.

Im Rahmen einer weiteren bevorzugten Ausführungsform der vorliegenden Erfindung werden als organische Polymere Derivate von Fettstoffen, insbesondere von Fettsäureestern eingesetzt, wie sie bereits oben beschrieben wurden.

Fettstoffe mit Silylgruppen, wie sie in den Dispersionen eingesetzt werden, lassen sich beispielsweise durch Umsetzung von Silanen mit ungesättigten Fettstoffen, beispielsweise mit Rapsöl, Sojaöl, Leinöl, Rapsfettsäuremethylester erhalten. Entsprechende Fettstoffe sowie ein geeignetes Verfahren zu deren Herstellung ist beispielsweise in der DE-A 42 09 325 beschrieben, deren Offenbarung als Bestandteil des vorliegenden Textes gilt. Weiterhin lassen sich Fettstoffe mit Silylgruppen durch Umsetzung entsprechend funktionalisierter Fettstoffe wie Rizinusöl, Maleinsäureanhydrid (MSA)-gepfropfte Triglyceride oder epoxidierte Triglyceride mit einer geeignet funktionalisierten Verbindung der allgemeinen Formeln II oder III erhalten.

Im Rahmen einer weiteren bevorzugten Ausführungsform der vorliegenden Erfindung werden als organische Polymere Polysiloxane eingesetzt. Geeignete Polysiloxane sind beispielsweise in der DE-A 36 37 836 oder in der DE-C 195 07 416 beschrieben, deren Offenbarung jeweils als Bestandteil der Offenbarung des vorliegenden Textes angesehen wird.

Beispiele für erfindungsgemäß geeignete und im Handel erhältliche silangruppenhaltige Polymere sind Desmoseal LS 2237 (Hersteller. Bayer AG) oder WITTON WSP-725 (Hersteller: Witton Chemical Co. Ltd.) KANEKA S 203, KANEKA MAX 450, KANEKA MAX 500, HANSE CHEMIE Polymer ST 50, HANSE CHEMIE Polymer OM 53, WITTON 627 oder WITTON 725/80.

In einer bevorzugten Ausführungsform der Erfindung enthält die Dispersion mehr als etwa 60 Gew.-% des Silangruppen tragenden Polymeren, beispielsweise mindestens etwa 65, mindestens etwa 70, mindestens etwa 75 oder mindestens etwa 80 Gew.-%. In besonderen Fällen kann der Gehalt an Silangruppen tragendem Polymeren auch über den genannten Werten liegen, beispielsweise bei mindestens etwa 85 oder 90 Gew.-%.

Die oben genannten organischen Polymeren werden in Dispersionen eingesetzt, die neben dem silangruppenhaltigen Polymeren noch mindestens ein weiteres organisches Polymeres oder ein Gemisch aus zwei oder mehr weiteren organischen Polymer enthalten. Eine solche Polymerdispersion weist gegenüber herkömmlichen Polymerdispersionen den Vorteil auf, daß bereits ein geringer Anteil an alkoxysilanterminierten Polymeren Oberflächenbeschichtungen, Verklebungen oder Dichtungen eine deutlich verbesserte Wasserbeständigkeit verleiht.

In einer bevorzugten Ausführungsform der Erfindung wird als erstes organisches Polymeres ein Polymeres ausgewählt aus der Gruppe bestehend aus Polyurethanen, Polyestern, Polyamiden, Polyethern, Polyacrylsäureestern, Polymethacrylsäureestern, Polystyrol, Polybutadienen, Polyethylen, Polyvinylestern, Ethylen/α-Olefincopolymeren, Styrol/Butadiencopolymeren oder EthylenNinylacetatcopolymeren, wie sie bereits oben beschrieben wurden, eingesetzt.

In einer weiteren bevorzugten Ausführungsform der vorliegenden Erfindung beträgt der gesamte Anteil an organischen Polymeren in der Dispersion mindestens etwa 60 Gew.-%. In einer weiteren bevorzugten Ausführungsform der Erfindung beträgt der Anteil an alkoxysilanterminierten Polymeren mindestens etwa 2 Gew.-%, bezogen auf den gesamten Polymergehalt der Dispersion. Der Anteil kann jedoch auch höher liegen, beispielsweise bei mindestens etwa 5 oder etwa 10 Gew.-%, mindestens etwa 20 Gew.-%, mindestens etwa 30 Gew.-% oder mindestens etwa 40 Gew.-% oder darüber. Bezogen auf den Gesamtanteil an organischen Polymeren in der Dispersion beträgt der Anteil an erstem organischem Polymeren etwa 1 bis etwa 99 Gew.-%.

Die Herstellung der Dispersionen erfolgt in der Regel durch Eintragen des Alkoxysilylgruppen tragenden organischen Polymeren in Wasser als kontinuierliche Phase, oder durch Zugabe von Wasser zu dem entsprechenden Alkoxysilylgruppen tragenden organischen Polymeren oder dem Gemisch aus zwei oder mehr Polymeren, wobei mindestens eines der Polymeren eine Alkoxysilylgruppe trägt.

Im Rahmen einer bevorzugten Ausführungsform der Erfindung können die Silylgruppen tragenden Polymeren im Gemisch mit einem oder mehreren wasserlöslichen ionischen oder nichtionischen Polymeren eingesetzt werden. Beispiele für solche Polymeren sind Polyacrylate, Polymethacrylate, Polyacrylamide, Polyvinylalkohol sowie Cellulose, lösliche Stärke und deren Derivate. Geeignet sind beispielsweise nicht-ionogene Celluloseether, beispielsweise Methylcellulose, Ethylcellulose, Hydroxyethylcellulose, Hydroxypropylcellulose und dergleichen. Darüber hinaus können die Cellulosederivate alkoxyliert sein, beispielsweise mit einem Alkoxylierungsgrad von etwa 0,05 bis 100.

Als wasserlösliche Stärkederivate eignen sich sämtliche entsprechend modifizierten natürlichen Stärketypen, zum Beispiel Stärke aus Kartoffeln, Mais, Weizen, Reis und dergleichen, wobei Derivate auf Basis von Kartoffel- und/oder Maisstärke besonders geeignet sind.

Ebenfalls geeignet ist Polyvinylalkohol, gegebenenfalls copolymerisiert mit weiteren ethylenisch ungesättigten Monomeren, beispielsweise mit Vinylacetat. Wenn als Comonomere wasserunlösliche Monomere mit einpolymerisiert werden, ist deren Menge im Copolymerisat dahingehend begrenzt, daß das entstehende Copolymere weiterhin wasserlöslich sein muß.

Ebenfalls geeignet sind wasserlösliche Proteine, wie sie beispielsweise durch die teilweise Hydrolyse von pflanzlichen oder tierischen proteinhaltigen Fasern erhältlich sind. Besonders geeignet sind dabei Casein, Sojaprotein sowie deren wasserlösliche Derivate.

Beim Eintrag von Alkoxysilylgruppen tragenden Verbindungen in Wasser erfolgt in der Regel eine im wesentlichen vollständige Hydrolyse der Alkoxysilylgruppen zu Hydroxysilylgruppen. Demnach liegen in den erfindungsgemäßen Dispersionen keine bzw. im wesentlichen keine Alkoxysilangruppen mehr vor. Gegebenenfalls kann es in der Dispersion im Anschluß an die Hydrolyse in geringem Maße zu einer Kondensation von Hydroxysilylgruppen kommen, die sich in enger räumlicher Nachbarschaft zueinander befinden. Eine solche Kondensation kann entweder zwischen Hydroxysilylgruppen an verschiedenen Polymermolekülen ablaufen, es kann jedoch ebenfalls eine Kondensation zwischen Hydroxysilylgruppen am gleichen Polymermolekül stattfinden.

Hydrolyse- und Kondensationseigenschaften verschiedener Alkoxysilangruppen werden beispielsweise in "Silane Coupling Agents", 2. Auflage, Plenum Press, New York, 1991, S. 55 ff. beschrieben, wobei die Offenbarung dieser Literaturstelle als Bestandteil der Offenbarung des vorliegenden Textes angesehen wird.

Zusätzlich zu den genannten Bestandteilen können die Polymerdispersionen noch einen oder mehrere Zusatzstoffe enthalten,

Als Zusatzstoffe eignen sich beispielsweise Stabilisatoren, Entschäumer, Antioxidantien, Photostabilisatoren, Pigmentverteiler, Füllstoffe, niedermolekulare Silane als Haftvermittler, Harze, Wachse, Tackifier, pH-Regler, Weichmacher, Farbstoffe, Indikatorfarbstoffe, Mikrobizide und dergleichen.

Als niedermolekulare Silane eignen sich Verbindungen mit einem Molekulargewicht von weniger als etwa 200, die eine oder mehrere Silangruppen aufweisen. Die niedermolekularen Silane können der erfindungsgemäßen Zubereitung entweder vor der Emulsion des Präpolymeren in Wasser oder nach der Emulgierung, beispielsweise als Emulsion niedermolekularer Silane in Wasser, zugeführt werden.

Die Zubereitung kann, bis zu etwa 20 Gew.-% an üblichen Takkifiern enthalten. Als Tackifier geeignet sind beispielsweise Harze, Terpen-Oligomere, Cumaron-/inden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich a- od. b-Pinen, Dipenten oder Limonen gewonnen werden. Die Polymerisation dieser Monomeren erfolgt in der Regel kationisch unter Initiierung mit Friedel-Crafts-Katalysatoren. Zu den Terpenharzen werden beispielsweise auch Copolymere aus Terpenen und anderen Monomeren, beispielsweise Styrol, α-Methylstyrol, Isopren und dergleichen, gerechnet. Die genannten Harze finden beispielsweise als Tackifier für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Zusatzstoff im oben genannten Sinne geeignet sind die Kolophoniumharze und deren Derivate, beispielsweise deren Ester oder Alkohole.

Als pH-Regler sind grundsätzlich alle anorganischen und organischen Säuren und Basen geeignet, welche die Stabilität der erfindungsgemäßen Polymerdispersion nicht nachteilig beeinflussen. Zur Einstellung basischer pH-Werte (pH-Wert > 7) ist beispielsweise Natriumhydrogencarbonat geeignet, die Einstellung saurer pH-Werte (pH-Wert < 7) wird im Rahmen einer bevorzugten Ausführungsform mit p-Toluolsulfonsäure durchgeführt, Die Polymerdispersion enthält die pH-Regler gegebenenfalls in einer Menge von bis zu etwa 5 Gew.-%, beispielsweise etwa 0,05 bis etwa 3 Gew.-% oder etwa 0,1 bis etwa 2 Gew.-%, bezogen auf die gesamte Dispersion.

Als Weichmacher geeignet sind beispielsweise Ester wie Abietinsäureester, Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester der difunktionellen, aliphatischen Dicarbonsäuren, beispielsweise das Veresterungsprodukt von Adipinsäuremonooctylester mit 2-Ethylhexanol (Edenol DOA, Fa. Henkel, Düsseldorf).

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Henkel, Düsseldorf).

In einer weiteren bevorzugten Ausführungsform werden als Weichmacher endgruppenverschlossene Polyethylenglykole eingesetzt. Beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Ebenfalls im Rahmen der vorliegenden Erfindung als Weichmacher geeignet sind Diurethane. Diurethane lassen sich beispielsweise durch Umsetzung von Diolen mit OH-Endgruppen mit monofunktionellen Isocyanaten Herstellen, indem die Stöchiometrie so gewählt wird, daß im wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Zur Herstellung der Diurethane auf Basis von Diolen können Diole mit 2 bis etwa 22 C-Atomen eingesetzt werden, beispielsweise Ethylenglykol, Propylenglykol, 1,2-Propandiol, Dibutandiol, Hexandiol, Octandiol oder technische Gemische von Hydroxyfettalkoholen mit etwa 14 C-Atomen, insbesondere Hydroxystearylalkohol. Bevorzugt werden lineare Diolmischungen, insbesondere solche, die Polypropylenglykol mit einem mittleren Molekulargewicht (Mₙ) von etwa 1.000 bis etwa 6.000 in Mengen über etwa 50 Gew.-%, insbesondere über etwa 70 Gew.-% enthalten. Ganz besonders bevorzugt werden Diurethane ausschließlich auf der Basis von Propylenglykol mit gleichen oder verschiedenen mittleren Molekulargewichten von etwa 1.000 bis etwa 4.000. Die freien OH-Gruppen der Diolmischungen werden im wesentlichen alle mit aromatischen oder aliphatischen Monoisocyanaten oder deren Gemischen abreagiert. Bevorzugte Monoisocyanate sind Phenylisocyanat oder Toluylenisocyanat oder deren Gemische.

Zur Herstellung der Diurethane auf Basis von Diisocyanaten werden aromatische oder aliphatische Diisocyanate oder deren Gemische eingesetzt. Als aromatische oder aliphatische Diisocyanate sind beispielsweise die Isocyanate geeignet, wie sie oben als zur Herstellung des erfindungsgemäßen Polyurethans geeignet angegeben wurden, vorzugsweise Toluylendiisocyanat (TDI). Die freien NCO-Gruppen der Diisocyanate werden im wesentlichen vollständig mit monofunktionellen Alkoholen, vorzugsweise linearen monofunktionellen Alkoholen oder Gemischen aus zwei oder mehr verschiedenen monofunktionellen Alkoholen umgesetzt. Besonders geeignet sind Gemische linearer monofunktioneller Alkohole. Geeignete Monoalkohole sind beispielsweise Monoalkohole mit 1 bis etwa 24 C-Atomen, beispielsweise Methanol, Ethanol, die Stellungsisomeren von Propanol, Butanol, Pentanol, Hexanol, Heptanol, Octanol, Decanol oder Dodecanol, insbesondere die jeweiligen 1-HydroxyVerbindungen, sowie Gemische aus zwei oder mehr davon. Ebenfalls geeignet sind sogenannte "technische Gemische" von Alkoholen und endgruppenverschlossene Polyalkylenglykolether. Besonders geeignet sind Alkoholgemische, die Polypropylenglykolmonoalkylether mit einem mittleren Molekulargewicht (Mₙ) von etwa 200 bis etwa 2.000 in einer Menge von mehr als etwa 50 Gew.-%, vorzugsweise mehr als etwa 70 Gew.-%, bezogen auf die Alkoholmischung, enthalten. Besonders bevorzugt werden Diurethane auf Basis von Diisocyanaten, deren freie NCO-Gruppen vollständig mittels Polypropylenglykolmonoalkylether mit einem mittleren Molekulargewicht von etwa 500 bis etwa 2.000 umgesetzt worden sind.

Die Zubereitung enthält die genannten Weichmacher in der Regel in einer solchen Menge, daß die Viskosität der Zubereitung bei der Dispergierung höchstens etwa 200.000 mPas (Brookfield RVT, Spindel 7, 2,5 U/min) bei einer Temperatur von etwa 1 °C bis etwa 140 °C, insbesondere bei etwa 20 °C bis etwa 99 °C, beispielsweise bei etwa 23 °C, beträgt. Als Weichmacher sind im Rahmen der vorliegenden Erfindung beispielsweise alle bei der Herstellung der silanterminierten Polymeren eingesetzten Bausteine geeignet.

Die Zubereitung kann weiterhin bis zu etwa 7 Gew.-%, insbesondere bis zu etwa 5 Gew.-% Antioxidantien enthalten.

Die Zubereitung kann weiterhin bis zu etwa 5 Gew.-% Katalysatoren zur Steuerung der Härtungsgeschwindigkeit enthalten. Als Katalysatoren geeignet sind beispielsweise metallorganische Verbindungen wie Eisen- oder Zinnverbindungen geeignet, insbesondere die 1,3-Dicarbonylverbindungen des Eisens oder des 2- bzw. 4-wertigen Zinns, insbesondere die Sn(II)-Carboxylate bzw. die Dialkyl-Sn-(IV)-Dicarboxylate oder die entsprechenden Dialkoxylate, beispielsweise Dibutylzinndilaurat, Dibutylzinndiacetat, Dioctylzinndiacetat, Dibutylzinnmaleat, Zinn(II)octoat, Zinn(II)phenolat oder die Acetylacetonate des 2- bzw, 4-wertigen Zinns.

Die Zubereitung kann bis zu etwa 30 Gew.-%, beispielsweise bis zu etwa 20 Gew.-%, an Füllstoffen enthalten. Als Füllstoffe geeignet sind beispielsweise gegenüber Isocyanaten und Silanen inerte anorganische Verbindungen wie Kreide, Kaikmehl, gefällte Kieselsäure, pyrogene Kieselsäure, Zeolithe, Bentonite, gemahlene Mineralstoffe, Glaskugeln, Glasmehl, Glasfasern und Glasfaserkurzschnitte sowie weitere, dem Fachmann bekannte anorganische Füllstoffe, sowie organische Füllstoffe, insbesondere Faserkurzschnitte oder Kunststoffhohlkugeln.

Gegebenenfalls können Füllstoffe eingesetzt werden, die der Zubereitung Thixotropie verleihen, beispielsweise quellbare Kunststoffe wie PVC.

Die Zubereitung kann bis zu etwa 2 Gew.-%, vorzugsweise etwa 1 Gew.-% an UV-Stabilisatoren enthalten. Als UV-Stabilisatoren besonders geeignet sind die sogenannten Hindered Amine Light Stabilisators (HALS). Es ist im Rahmen der vorliegenden Erfindung bevorzugt, wenn ein UV-Stabilisator eingesetzt wird, der eine Silangruppe trägt und beim Vernetzen bzw. Aushärten in das Endprodukt eingebaut wird.

Hierzu besonders geeignet sind die Produkte Lowilite 75, Lowilite 77 (Fa, Great Lakes, USA).

Die Herstellung der Zubereitungen kann auf unterschiedlichste Weise erfolgen. In der Regel ist es ausreichend, das Silylgruppen tragende Polymere, während oder nach seiner Herstellung, gegebenenfalls zusammen mit weiteren organischen Polymeren, gegebenenfalls zusammen mit einem Lösemittel, in der gewünschten Menge Wasser zu dispergieren.

Wenn das Silylgruppen tragende Polymere jedoch ein Polyurethan ist, so ist es im Rahmen der vorliegenden Erfindung bevorzugt, zunächst ein NCO-Gruppen tragendes Präpolymeres in Wasser zu dispergieren und anschließend ein entsprechendes Epoxysilan oder ein Aminosilan in der Dispersion mit dem Präpolymeren umzusetzen.

Die Polymerdispersionen sind für ein breites Feld von Anwendungen im Bereich der Oberflächenbeschichtungen, Kleb- und Dichtstoffe geeignet, Besonders geeignet sind die Zubereitungen beispielsweise als Kontaktklebstoff, 1 K-Klebstoff, 2K-Klebstoff, Montageklebstoff, Sprühklebstoff, Klebestift, Dichtmasse, insbesondere Fugendichtmasse, und zur Oberflächenversiegelung, als Spachtelmasse oder zur Herstellung von Formteilen.

Die Polyurethane oder die Zubereitungen sind beispielsweise als Klebstoff für Kunststoffe, Metalle, Spiegel, Glas, Keramik, mineralische Untergründe, Holz, Leder, Textilien, Papier, Pappe und Gummi geeignet, wobei die Materialien jeweils mit sich selbst oder beliebig untereinander verklebt werden können.

Weiterhin eignen sich die Polyurethane oder die Zubereitungen beispielsweise als Dichtstoff für Kunststoffe, Metalle, Spiegel, Glas, Keramik, mineralische. Untergründe, Holz, Leder, Textilien, Papier, Pappe und Gummi, wobei die Materialien jeweils mit sich selbst oder beliebig gegeneinander abgedichtet werden können.

Weiterhin eignen sich die Polyurethane oder die Zubereitungen beispielsweise als Oberflächenbeschichtungsmittel für Oberflächen aus Kunststoff, Metall, Glas, Keramik, mineralischen Materialien, Holz, Leder, Textilien, Papier, Pappe und Gummi.

Die Polyurethane oder die Zubereitungen sind weiterhin zur Herstellung von Formteilen beliebiger Raumform geeignet.

Ein weiteres Anwendungsgebiet für die Polyurethane oder die Zubereitungen ist die Verwendung als Dübel- Loch- oder Rißspachtelmasse.

Die Erfindung wird nachfolgend durch Beispiele erläutert. Alle Prozentangaben beziehen sich, soweit keine andere Bestimmung angegeben ist, auf Gewichtsprozent (Gew.-%).

### Rezepturbeispiel 1

| | |
|---|---|
| silylterminiertes Polyurethan, hergestellt durch Umsetzung von 89 Gew.-% Pluriol P 4000 (Hersteller: Fa. Bayer AG), 6,5 Gew.-% Desmodur T 100 (Hersteller: Fa. Bayer AG) und 4,5 Gew.-% Dynasylan AMMO (Hersteller: Fa. Sivento) | 74 % |
| | |
| Emulgator Disponil AAP 43 (Hersteller: Fa. Henkel) | 2 % |
| Wasser mit 1 % Natriumcarbonat | 24 % |
| | |
| Festkörper: 75 % | |
| pH: 9,0 | |
| Typ: Wasser wird zum Präpolymeren gegeben | |
| Herstelltemperatur: 25 - 35 °C | |

### Rezepturbeispiel 2

| | |
|---|---|
| silylterminiertes Polyurethan, hergestellt durch Umsetzung von 95 Gew.-% Acclaim DP-8200 (Hersteller: Fa. Arco Chemicals) und 5 Gew.-% Silquest Y-5187) (Hersteller: Fa. WITCO) | 74 % |
| | |
| Emulgator: Disponil AAP 43 | 2 % |
| Wasser mit 1 % p-Toluolsulfonsäure | 24 % |
| | |
| Festkörper: 75 % | |
| pH: 5,0 | |
| Typ: Wasser wird zum Präpolymeren gegeben | |
| Herstelltemperatur: 45 - 50 °C | |

### Rezepturbeispiel 3

| | |
|---|---|
| MS-Polymer ® Kaneka-Silyl MAX 450 | 74 % |
| Emulgator Disponil AAP 43 | 2 % |
| Wasser mit 1 % p-Toluolsulfonsäure | 24 % |
| | |
| Festkörper: 75 % | |
| pH: 5,0 | |
| Typ: Wasser wird zum Präpolymeren gegeben | |
| Herstelltemperatur: 30 - 40 °C | |

### Rezepturbeispiel 4

| | |
|---|---|
| silylterminiertes Polyurethan, hergestellt durch Umsetzung von 95 Gew.-% Acclaim DP-12200 (Hersteller: Fa. Arco Chemicals) und 5 Gew.-% Silquest Y-5187 | 74 % |
| | |
| Emulgator: Disponil AAP 43 | 2 % |
| Wasser mit 1 % p-Toluolsulfonsäure | 24 % |
| | |
| Festkörper: 75 % | |

### Herstellung aller Emulsionen:

Das jeweilige Polymere wurde mit dem Emulgator vermischt, und anschließend Wasser mit einem Dissolver eingerührt. Die Temperatur betrug dabei weniger als 100 °C.

Alle Emulsionen hatten eine cremige Konsistenz und trockneten transparent auf.

## Patentansprüche

1. Verwendung einer Polymerdispersion, enthaltend Wasser, mindestens ein erstes organisches Polymeres das frei von ionischen Gruppen ist und mindestens eine Gruppe der allgemeinen Formel I
-A-Si(Z)ₙ(OH)₃₋ₙ (I),
worin A für CH₂ oder für einen linearen oder verzweigten, gesättigten oder ungesättigten Alkylenrest mit 2 bis etwa 12 C-Atomen oder für einen Arylenrest mit etwa 6 bis etwa 18 C-Atomen oder einen Arylenalkylenrest mit etwa 7 bis etwa 19 C-Atomen, Z für CH₃, O-CH₃ oder für einen linearen oder verzweigten, gesättigten oder ungesättigten Alkylrest oder Alkoxyrest mit 2 bis etwa 12 C-Atomen und n für 0, 1, oder 2 steht, oder ein Kondensationsprodukt mindestens zwei solcher Gruppen, aufweist und ein weiteres organisches Polymeres oder ein Gemisch aus zwei oder mehr weiteren organischen Polymeren, als Dichtmasse.

2. Verwendung nach Anspruch 1, **dadurch gekennzeichnet, daß** als erstes organisches Polymeres ein Polymeres ausgewählt aus der Gruppe bestehend aus Polyurethanen, Polyestern, Polyamiden, Polyethern, Polyacrylsäureestern, Polymethacrylsäureestern, Polystyrol, Polybutadienen, Polyethylen, Polyvinylestern, Ethylen/α-Olefincopolymeren, Styrol/Butadiencopolymeren oder Ethylen/Vinylacetatcopolymeren eingesetzt wird.

3. Verwendung nach Anspruch 1, **dadurch gekennzeichnet, daß** als erstes organisches Polymeres ein Polymeres ausgewählt aus der Gruppe bestehend aus Polyestern, Polyamiden, Polyethern, Polyacrylsäureestern, Polymethacrylsäureestern, Polystyrol, Polybutadienen, Polyethylen, Polyvinylestern, Ethylen/α-Olefincopolymeren, Styrol/Butadiencopolymeren oder EthylenNinylacetatcopolymeren eingesetzt wird.

4. Verwendung nach einem der Ansprüche 1 bis 3, **dadurch gekennzeichnet, daß** als weiteres organisches Polymeres oder als Gemisch aus zwei oder mehr weiteren organischen Polymeren ein Polymeres ausgewählt aus der Gruppe bestehend aus Polyurethanen, Polyamiden, Polyethern, Polyestern, Polyvinylestern, Polyacrylsäureestern, Polymethacrylsäureestern oder Styrol/Butadiencopolymeren oder ein Gemisch aus zwei oder mehr der genannten Polymeren enthalten ist.

5. Verwendung nach einem der Ansprüche 1 bis 4, **dadurch gekennzeichnet, daß** der Anteil an organischen Polymeren mindestens 60 Gew.-% beträgt.

## Claims

1. Use of a polymer dispersion comprising water, at least one first organic polymer which is free from ionic groups and contains at least one group of the general formula I
-A-Si(Z)ₙ(OH)₃₋ₙ (I),
in which A is CH₂ or is a linear or branched, saturated or unsaturated alkylene radical having 2 to about 12 C atoms or is an arylene radical having about 6 to about 18 C atoms or an arylene-alkylene radical having about 7 to about 19 C atoms, Z is CH₃, O-CH₃ or is a linear or branched, saturated or unsaturated alkyl radical or alkoxy radical having 2 to about 12 C atoms and n is 0, 1, or 2, or a condensation product of at least two such groups, and a further organic polymer or a mixture of two or more further organic polymers as a sealant.

2. Use according to Claim 1, **characterized in that** as first organic polymer a polymer selected from the group consisting of polyurethanes, polyesters, polyamides, polyethers, polyacrylic esters, polymethacrylic esters, polystyrene, polybutadienes, polyethylene polyvinyl esters, ethylene/α-olefin copolymers, styrene/butadiene copolymers or ethylene/vinyl acetate copolymers is used.

3. Use according to Claim 1, **characterized in that** as first organic polymer a polymer selected from the group consisting of polyesters, polyamides, polyethers, polyacrylic esters, polymethacrylic esters, polystyrene, polybutadienes, polyethylene, polyvinyl esters, ethylene/α-olefin copolymers, styrene/butadiene copolymers or ethylene/vinyl acetate copolymers is used.

4. Use according to any one of Claims 1 to 3, **characterized in that** as further organic polymer or as a mixture of two or more further organic polymers a polymer selected from the group consisting of polyurethanes, polyamides, polyethers, polyesters, polyvinyl esters, polyacrylic esters, polymethacrylic esters or styrene/butadiene copolymers or a mixture of two or more of the stated polymers is included.

5. Use according to any one of Claims 1 to 4, **characterized in that** the fraction of organic polymers is at least 60% by weight.

## Revendications

1. Utilisation d'une dispersion polymère, contenant de l'eau, au moins un premier polymère organique qui est exempt de groupes ioniques et qui présente au moins un groupe répondant à la formule générale I
-A-Si(Z)ₙ(OH)₃₋ₙ (I),
dans laquelle A représente un groupe CH₂ ou un radical alkylène linéaire ou ramifié, saturé ou insaturé, contenant de 2 à environ 12 atomes de carbone, ou un radical arylène contenant d'environ 6 à environ 18 atomes de carbone, ou un radical arylène-alkylène contenant d'environ 7 à environ 19 atomes de carbone, Z représente un groupe CH₃, un groupe OCH₃ ou un radical alkyle ou alcoxy linéaire ou ramifié, saturé ou insaturé, contenant de 2 à environ 12 atomes de carbone, et n est égal à 0, 1 ou 2, ou un produit de condensation d'au moins deux groupes de ce type, et un autre polymère organique ou un mélange de deux autres polymères organiques ou plus, comme matériau d'étanchéité.

2. Utilisation selon la revendication 1, **caractérisée en ce que**, à titre de premier polymère organique, on met en oeuvre un polymère choisi parmi le groupe constitué par des polyuréthanes, des polyesters, des polyamides, des polyéthers, des esters d'acide polyacrylique, des esters d'acide polyméthacrylique, du polystyrène, des polybutadiènes, du polyéthylène, des esters polyvinyliques, des copolymères d'éthylène/α-oléfine, des copolymères de styrène/butadiène ou des copolymères d'éthylène/acétate de vinyle.

3. Utilisation selon la revendication 1, **caractérisée en ce que**, à titre de premier polymère organique, on met en oeuvre un polymère choisi parmi le groupe constitué par des polyesters, des polyamides, des polyéthers, des esters d'acide polyacrylique, des esters d'acide polyméthacrylique, du polystyrène, des polybutadiènes, du polyéthylène, des esters polyvinyliques, des copolymères d'éthylène/α-oléfine, des copolymères de styrène/butadiène ou des copolymères d'éthylène/acétate de vinyle.

4. Utilisation selon l'une quelconque des revendications 1 à 3, **caractérisée en ce que**, à titre de polymère organique supplémentaire ou à titre de mélange de deux polymères organiques supplémentaires ou plus, est contenu un polymère choisi parmi le groupe constitué par des polyuréthanes, des polyamides, des polyéthers, des polyesters, des esters polyvinyliques, des esters d'acide polyacrylique, des esters d'acide polyméthacrylique ou des copolymères de styrène/butadiène ou un mélange de deux des polymères mentionnés ou plus.

5. Utilisation selon l'une quelconque des revendications 1 à 4, **caractérisée en ce que** la fraction des polymères organiques s'élève à au moins 60 % en poids.
